(19) Europäisches Patentamt / European Patent Office / Office européen des brevets

(11) **EP 4 692 269 A1**

(12) **EUROPEAN PATENT APPLICATION**
published in accordance with Art. 153(4) EPC

(43) Date of publication:
**11.02.2026 Bulletin 2026/07**

(21) Application number: **24780074.1**

(22) Date of filing: **22.03.2024**

(51) International Patent Classification (IPC):
**C09J 201/00** (2006.01)    **C09J 9/02** (2006.01)

(52) Cooperative Patent Classification (CPC):
**C09J 9/02; C09J 201/00**

(86) International application number:
**PCT/JP2024/011490**

(87) International publication number:
**WO 2024/203956 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023054107**

(71) Applicant: **Nitto Denko Corporation
Ibaraki-shi, Osaka 567-8680 (JP)**

(72) Inventors:
- **MORISHITA Hiromitsu
  Ibaraki-shi, Osaka 567-8680 (JP)**
- **SHIMOKAWA Kayo
  Ibaraki-shi, Osaka 567-8680 (JP)**
- **TSUKAMOTO Narumi
  Ibaraki-shi, Osaka 567-8680 (JP)**
- **AOKI Yohei
  Ibaraki-shi, Osaka 567-8680 (JP)**

(74) Representative: **Gill Jennings & Every LLP
The Broadgate Tower
20 Primrose Street
London EC2A 2ES (GB)**

(54) **THREADLIKE ADHESIVE BODY**

(57) Provided is a threadlike pressure-sensitive adhesive body including: a conductive core material including a plurality of filaments; and a pressure-sensitive adhesive covering a surface of the core material in a longitudinal direction, in which a resistance value of the threadlike pressure-sensitive adhesive body in a Z-axis direction is $1.0 \times 10^6$ [$\Omega$/100 mm] or less. The resistance value of the threadlike pressure-sensitive adhesive body in the Z-axis direction is measured 30 minutes after two copper foil plates are bonded via the threadlike pressure-sensitive adhesive body and are pressure-bonded at a pressure of 0.35 MPa for 10 seconds. Here, the Z-axis direction is a direction in which a pressure is applied to the threadlike pressure-sensitive adhesive body when the two copper foil plates are pressure-bonded via the threadlike pressure-sensitive adhesive body. The measurement is performed at 23°C.

*FIG. 1*

**Description**

TECHNICAL FIELD

The present invention relates to a threadlike pressure-sensitive adhesive body in which a longitudinal direction of a core material is coated with a pressure-sensitive adhesive.

BACKGROUND ART

When a plurality of articles are bonded in a production process or the like of an electric or electronic device, a pressure-sensitive adhesive body such as a conductive pressure-sensitive adhesive sheet or a conductive pressure-sensitive adhesive tape having adhesiveness to an adherend and conductivity may be used.
In addition, various shapes are required for a shape of a portion where articles are bonded via a pressure-sensitive adhesive body (hereinafter, also referred to as "bonding region") according to the articles to be bonded.
For example, in an electronic device such as a smartphone, narrowing of the bonding region may be required when bonding articles that constitute the electronic device due to a request for miniaturization or a request for design. For example, when fixing a cover glass of the smartphone, narrowing of the bonding region is particularly required to make the smartphone bezel-less.
Further, the bonding region may be required to have a complex shape such as a bent shape according to the shape of the articles to be bonded.
Here, Patent Literature 1 discloses a composite, which has good conductivity in a longitudinal direction of the composite and in a circumferential direction of 360 degrees (Y-axis and Z-axis directions) with the longitudinal direction as an axis (X axis) and includes an elongated pressure-sensitive adhesive body and a conductive linear member, and discloses, as an aspect thereof, a composite in which the conductive linear member is spirally attached on a surface of the pressure-sensitive adhesive body.

CITATION LIST

PATENT LITERATURE

Patent Literature 1: WO2022/209904

SUMMARY OF INVENTION

TECHNICAL PROBLEM

The composite disclosed in Patent Literature 1 is considered to have good conductivity in the longitudinal direction of the composite and the circumferential direction of 360 degrees (Y-axis and Z-axis directions) with the longitudinal direction as an axis (X axis). However, in the composite disclosed in Patent Literature 1, since the conductive linear member is provided on the surface of the pressure-sensitive adhesive body, a part of the surface of the pressure-sensitive adhesive body is covered with the conductive linear member, and there are many non-pressure-sensitive adhesive portions on the surface of the pressure-sensitive adhesive body, so that it is difficult to say that the composite has a sufficient adhesion force.
In view of the above, an object of the present invention is to provide a threadlike pressure-sensitive adhesive body having excellent conductivity when pressure-bonded to an adherend and having a high adhesion force.

SOLUTION TO PROBLEM

An aspect of the present invention is a threadlike pressure-sensitive adhesive body including: a conductive core material including a plurality of filaments; and a pressure-sensitive adhesive covering a surface of the core material in a longitudinal direction, in which a resistance value of the threadlike pressure-sensitive adhesive body in a Z-axis direction measured under the following conditions is $1.0 \times 10^6$ [$\Omega$/100 mm] or less,
(conditions)
two copper foil plates are bonded via the threadlike pressure-sensitive adhesive body, and the resistance value of the threadlike pressure-sensitive adhesive body in the Z-axis direction is measured 30 minutes after performing pressure bonding at a pressure of 0.35 MPa for 10 seconds, here, the Z-axis direction is a direction in which a pressure is applied to the threadlike pressure-sensitive adhesive body when the two copper foil plates are pressure-bonded via the threadlike pressure-sensitive adhesive body, and the measurement is performed at 23°C.

In an aspect of the present invention, the threadlike pressure-sensitive adhesive body may have a compression ratio of 13% or more when compression is performed at 0.35 MPa for 10 seconds under a condition of 23°C.

In an aspect of the present invention, the core material may include a metal-coated fiber in which a surface layer of a fiber formed of a resin is coated with a metal.

In an aspect of the present invention, the pressure-sensitive adhesive may contain a surfactant.

In an aspect of the present invention, the threadlike pressure-sensitive adhesive body may have a diameter of 1 mm or less.

ADVANTAGEOUS EFFECTS OF INVENTION

The threadlike pressure-sensitive adhesive body according to an aspect of the present invention has excellent conductivity when pressure-bonded to the adherend and has a high adhesion force.

BRIEF DESCRIPTION OF DRAWINGS

[FIG. 1] FIG. 1 is a cross-sectional view in a direction perpendicular to a longitudinal direction of a threadlike pressure-sensitive adhesive body according to one embodiment of the present invention.

[FIG. 2] (a) and (b) of FIG. 2 illustrate cross-sectional views of a composite of a first adherend, the threadlike pressure-sensitive adhesive body, and a second adherend. Here, (a) of FIG. 2 illustrates a state before the first adherend and the second adherend are pressure-bonded to the threadlike pressure-sensitive adhesive body, and (b) of FIG. 2 illustrates a state in which the first adherend and the second adherend are pressure-bonded to the threadlike pressure-sensitive adhesive body.

[FIG. 3] (a) and (b) of FIG. 3 are views illustrating a method for evaluating a resistance value of the threadlike pressure-sensitive adhesive body in a Z-axis direction, and (a) is a perspective view, and (b) is a cross-sectional view of a cross section taken along a line A-A in (a).

DESCRIPTION OF EMBODIMENTS

Hereinafter, embodiments of the present invention will be described in detail, but the present invention is not limited to such embodiments.

In the following drawings, the same reference numerals may be given to members and portions having the same functions, and redundant description may be omitted or simplified. In addition, the embodiments described in the drawings are schematically illustrated to clearly describe the present invention, and sizes and scales of actual products are not necessarily accurately expressed.

When an expression "to" is used in the present description, it is used as an expression including numerical values or physical property values before and after it.

A threadlike pressure-sensitive adhesive body according to one embodiment of the present invention includes: a conductive core material including a plurality of filaments; and a pressure-sensitive adhesive covering a surface of the core material in a longitudinal direction, in which a resistance value of the threadlike pressure-sensitive adhesive body in a Z-axis direction measured under conditions to be described later is $1.0 \times 10^6$ [$\Omega$/100 mm] or less.

Hereinafter, the conductive core material used in the threadlike pressure-sensitive adhesive body according to the present embodiment may be simply referred to as a "core material".

In the present description, the term "threadlike" refers to a shape in which a length in the longitudinal direction is sufficiently long with respect to a length in a width direction, a ratio (long axis/short axis) of a length of the long axis to a length of the short axis in a cross-sectional shape is, for example, 200 or more, and the shape is in a state of being bendable in various directions at various angles, like a thread.

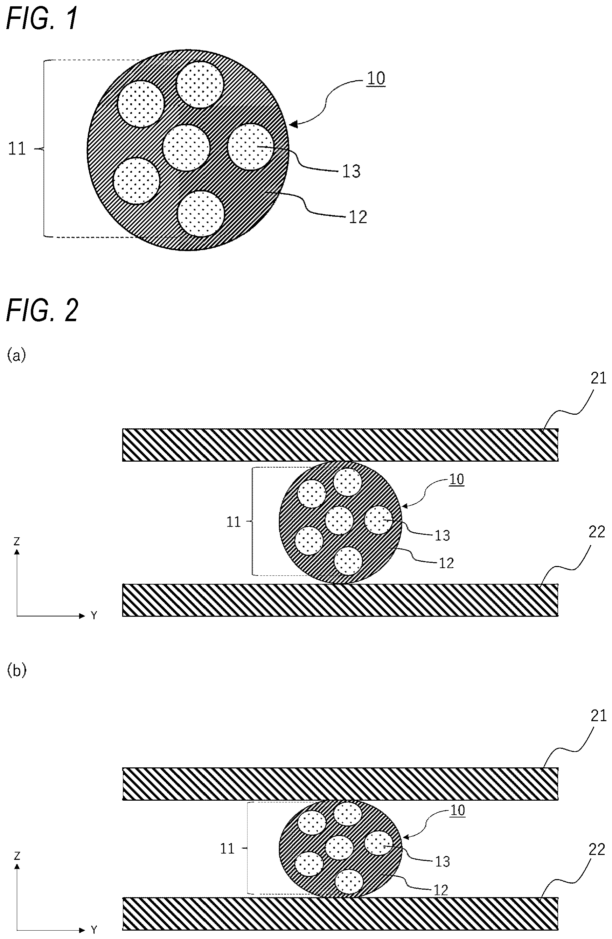

FIG. 1 is a cross-sectional view in a direction perpendicular to the longitudinal direction of a threadlike pressure-sensitive adhesive body 10 according to one embodiment of the present invention. The threadlike pressure-sensitive adhesive body 10 according to the present embodiment includes: a conductive core material 11 including a plurality of (six in this example) filaments 13; and a pressure-sensitive adhesive 12 covering a surface of the core material 11 in the longitudinal direction.

An adhesion force (difficulty in debonding adherends) when the adherends are bonded via the threadlike pressure-sensitive adhesive body 10 greatly depends on a contact area between the threadlike pressure-sensitive adhesive body 10 and the adherends.

In a case where the adherends are bonded using the threadlike pressure-sensitive adhesive body 10 of the present embodiment that includes the core material 11 including a plurality of filaments 13, each filament 13 constituting the core material 11 spreads so as to be scattered, and the core material 11 can be deformed so as to be crushed. Accordingly, the threadlike pressure-sensitive adhesive body 10 of the present embodiment can come into contact with the adherends over a wider area as compared with a threadlike pressure-sensitive adhesive body including a core material formed of one thread (monofilament).

In addition, since the core material 11 in the threadlike pressure-sensitive adhesive body 10 of the present embodiment includes the plurality of filaments 13, the core material 11 has a large surface area, and thus an adhesion amount of the pressure-sensitive adhesive 12 per unit length can be increased.

For the reasons as described above, the threadlike pressure-sensitive adhesive body 10 of the present embodiment has the core material 11 of the same thickness (fineness), and can exhibit a higher pressure-sensitive adhesive force as compared with a threadlike pressure-sensitive adhesive body including a core material formed of a monofilament.

In order to obtain the above effect, in the threadlike pressure-sensitive adhesive body 10 of the present embodiment, the core material 11 includes the plurality of filaments 13. Hereinafter, the core material 11 including the plurality of filaments 13 may be referred to as a multifilament thread. In order to further improve the pressure-sensitive adhesive force of the threadlike pressure-sensitive adhesive body 10, the number of the filaments 13 constituting the core material 11 in the present embodiment is preferably 2 or more, more preferably 3 or more, and further preferably 4 or more. On the other hand, in a case where the thickness (fineness) of the core material 11 is kept at the same level, when the number of the filaments 13 constituting the core material 11 is increased, each filament 13 becomes thinner (has a smaller fineness). If each filament 13 becomes too thin, it may result in a reduction in strength of the core material 11 or a reduction in handleability, and therefore, the number of the filaments 13 constituting the core material 11 is preferably 2,000 or less, more preferably 1,500 or less, and particularly preferably 1,000 or less.

The core material 11 in the present embodiment may be a twisted thread that is twisted, or may be a non-twisted thread that is not twisted. That is, the number of twists of the core material 11 may be more than 0 twists/m, or may be 0 twists/m. In addition, the core material 11 may be a material in which a bundle of a plurality of multifilaments is twisted or not twisted, the multifilaments being twisted threads or non-twisted threads.

In a case where a force is applied in a direction in which the adherends bonded using the threadlike pressure-sensitive adhesive body 10 of the present embodiment are peeled off, each filament 13 spreads and the core material 11 is deformed so as to extend in a direction parallel to that of the applied force in a thickness direction (direction perpendicular to longitudinal direction). However, when a shape of the core material 11 is too distorted in this case, a stress concentrates on the distorted portion, and the portion is likely to be a starting point of peeling. Therefore, in order to exhibit more excellent pressure-sensitive adhesive force, it is preferable that each filament 13 constituting the core material 11 has a certain degree of cohesion. As described above, the core material 11 in the present embodiment may be a non-twisted thread or a twisted thread, that is, the number of twists of the core material 11 in the present embodiment may be 0 twists/m or more, but the core material 11 is preferably twisted in order to provide each filament 13 constituting the core material 11 with a certain degree of cohesion. Specifically, the number of twists of the core material 11 is preferably 10 twists/m or more, more preferably 20 twists/m or more, and further preferably 30 twists/m or more.

On the other hand, in order to sufficiently deform the core material 11 when the adherends are bonded via the threadlike pressure-sensitive adhesive body 10, and in order to increase the adhesion amount of the pressure-sensitive adhesive 12 per unit length, it is preferable that the twisting of the core material 11 is not too strong. Therefore, the number of twists of the core material 11 is preferably 3,000 twists/m or less, more preferably 1,500 twists/m or less, further preferably 800 twists/m or less, and particularly preferably 250 twists/m or less.

In a case where the core material 11 is twisted, it is preferable to also control a twist coefficient represented by the following Formula (A) from the same viewpoint as above. The twist coefficient is an index for discussing an influence of twisting (influence on cohesion, ease of deformation, adhesion amount of pressure-sensitive adhesive 12, and the like of core material 11) regardless of the thickness of the core material 11. That is, the influence of the number of twists on the core material 11 varies depending on the thickness of the core material 11, but if the twist coefficient is the same, the influence of twisting on the core material 11 is the same regardless of the thickness of the core material 11.

In the present embodiment, the twist coefficient of the core material 11 is preferably 0 or more, and more preferably more than 0. On the other hand, if the twist coefficient is 200 or less, flexibility of the core material 11, and even the threadlike pressure-sensitive adhesive body 10, is improved, making it easier to be applied to complex shapes such as curved portions, bent portions, and uneven portions, and narrow portions. Therefore, the twist coefficient of the core material 11 is preferably 200 or less, more preferably 170 or less, more preferably 100 or less, more preferably 80 or less, and further preferably less than 50.

[Math. 1]

$$K = T/\sqrt{10000/D} \quad \cdot \cdot \cdot \quad (A)$$

In Formula (A), K represents the twist coefficient, T represents the number of twists (unit: [twist/m]), and D represents the fineness (unit: [dtex]).

The threadlike pressure-sensitive adhesive body 10 of the present embodiment includes the conductive core material 11 as the core material 11. By using the conductive core material 11, a resistance value of the threadlike pressure-sensitive adhesive body 10 in the Z-axis direction including the core material 11 is likely to be reduced.

Examples of the conductive core material 11 include a conductive thread and a bundle of metal thin wires, and the conductive thread is preferable from the viewpoint of flexibility.

The conductive thread preferably contains a conductive fiber as the filament 13, and examples thereof include a fiber bundle of conductive fibers or fibers containing a conductive fiber, or a twisted thread, a combined thread, a spun thread, and a blended thread using a conductive fiber or a fiber containing a conductive fiber.

The conductive fiber may be any fiber having conductivity, and may be, for example, a fiber in which a carbon fiber, a carbon particle, a metal fiber, a metal particle, and the like are blended, a fiber containing a conductive material such as a metal, a conductive oxide, a carbon-based conductive material (graphite, carbon, carbon nanotube, graphene, or the like), or a conductive polymer, or a fiber coated with the above-described conductive material. Among them, the fiber coated with the conductive material is preferable, and a metal-coated fiber in which a surface layer of a fiber formed of a resin (polymer material) is coated with a metal is particularly preferable, because they have higher flexibility.

Here, the fiber coated with the conductive material may be a natural fiber or a chemical fiber.

Examples of the natural fiber include a plant fiber and an animal fiber.

Examples of the chemical fiber include fibers formed of, a resin (polymer material) such as rayon, cupro, acetate, promix, nylon, aramid, vinylon, vinylidene, polyvinyl chloride, acryl, polyolefin (polyethylene, polypropylene, ethylene-propylene copolymer, ethylene-vinyl acetate copolymer, and the like), a polyester resin (polyethylene terephthalate and the like), a vinyl chloride resin, a vinyl acetate resin, a polyimide resin, a polyamide resin, a fluororesin, polyurethane, polyclar, and polylactic acid; a rubber such as a synthetic rubber (natural rubber, polyurethane, and the like); a foam such as a polyurethane foam and a polychloroprene rubber foam; and the like. Among the chemical fibers, from the viewpoint of availability, the chemical fiber formed of a resin is preferable, and the chemical fiber formed of polyester, nylon, acryl, or the like is particularly preferable.

The metal as the above conductive material is not particularly limited, and examples thereof include a metal simple substance formed of a metal element such as silver, copper, aluminum, or nickel, or a compound or alloy containing one or more of these metal elements. Among them, the metal simple substance formed of a metal element such as silver or copper, or the compound or alloy containing one or more of these metal elements is preferable because they have high flexibility.

Examples of the metal-coated fiber in which a surface layer of a fiber formed of a resin is coated with a metal include a copper sulfide-coated nylon fiber, a copper sulfide-coated acrylic fiber, a silver-coated polyester fiber, and a silver-coated nylon fiber.

A fiber diameter (single thread diameter) of the conductive fiber is preferably 5 $\mu$m or more, more preferably 10 $\mu$m or more, and further preferably 15 $\mu$m or more, from the viewpoint of fiber strength. In addition, the fiber diameter is preferably 200 $\mu$m or less, more preferably 150 $\mu$m or less, and further preferably 100 $\mu$m or less, from the viewpoint of flexibility and appearance. The fiber diameter (single thread diameter) of the conductive fiber is, for example, 5 $\mu$m to 200 $\mu$m.

A total fineness and a single fiber fineness of the conductive fiber are appropriately selected according to an application of the threadlike pressure-sensitive adhesive body 10, and it is preferable that the total fineness is in a range of 20 dtex to 2,000 dtex and the single fiber fineness is in a range of 0.5 dtex to 10.0 dtex.

Examples of the metal thin wire (filament 13) in the core material 11 in which the metal thin wires are bundled include a nichrome wire, a copper wire, and a silver wire.

A diameter of the metal thin wire is not particularly limited, and is preferably 10 $\mu$m to 200 $\mu$m, and more preferably 20 $\mu$m to 100 $\mu$m, from the viewpoint of flexibility and conductivity.

In the present embodiment, a resistance value of the conductive core material 11 in the longitudinal direction (X-axis direction) is preferably $1.0 \times 10^6$ [$\Omega$/100 mm] or less, more preferably $1.0 \times 10^5$ [$\Omega$/100 mm] or less, and further preferably $1.0 \times 10^4$ [$\Omega$/100 mm] or less. When the resistance value of the core material 11 in the X-axis direction is $1.0 \times 10^6$ [$\Omega$/100 mm] or less, the resistance value in the Z-axis direction of the threadlike pressure-sensitive adhesive body 10 including such a core material 11 is likely to be reduced.

A lower limit of the resistance value of the conductive core material 11 in the X-axis direction is not particularly limited, and is actually $1.0 \times 10^{-1}$ [$\Omega$/100 mm] or more. The resistance value of the conductive core material 11 in the X-axis direction is, for example, $1.0 \times 10^{-1}$ [$\Omega$/100 mm] to $1.0 \times 10^6$ [$\Omega$/100 mm].

Here, the resistance value of the conductive core material 11 in the longitudinal direction (X-axis direction) is measured by, for example, a measurement method described in a section of Examples.

The filament 13 forming the core material 11 in the threadlike pressure-sensitive adhesive body 10 may be a hollow thread. In general, the hollow thread has high flexibility in the thickness direction and is likely to be deformed, so that the core material 11 obtained using the hollow thread also has high flexibility in the thickness direction and is likely to be deformed.

Therefore, when the hollow thread is used for the filament 13 forming the core material 11, the above-described core material 11 is more likely to be deformed so as to be crushed. In addition, if the flexibility of the core material 11 is high, when a force is applied in the direction in which the adherends bonded using the threadlike pressure-sensitive adhesive body 10 are peeled off, a stress is likely to be dispersed due to the deformation of the core material 11, and therefore, a stress is less likely to be applied to an interface (pressure-sensitive adhesive surface) between the threadlike pressure-sensitive adhesive body 10 and the adherends, and peeling is less likely to occur. In view of the above, when the hollow thread is used for the filament 13 forming the core material 11, a threadlike pressure-sensitive adhesive body 10 having a particularly excellent pressure-sensitive adhesive force can be obtained.

Since a hollow thread is generally brittle, in a case where the hollow thread is used for the filament 13 forming the core material 11, the hollow thread is preferably used without being twisted.

The thickness (fineness) of the core material 11 in the threadlike pressure-sensitive adhesive body 10 is not particularly limited, and may be appropriately adjusted according to the application of the threadlike pressure-sensitive adhesive body 10 and a type of the adherend, and the fineness is, for example, about 20 dtex to 2,000 dtex.

The core material 11 may contain various additives such as a filler (inorganic filler, organic filler, and the like), an anti-aging agent, an antioxidant, an ultraviolet absorber, an antistatic agent, a lubricant, a plasticizer, and a colorant (pigment, dye, and the like) as necessary. A known or common surface treatment such as a corona discharge treatment, a plasma treatment, or application of an undercoat agent may be performed on a surface of the core material 11.

In the threadlike pressure-sensitive adhesive body 10 of the present embodiment, the pressure-sensitive adhesive 12 is not particularly limited, and a known pressure-sensitive adhesive can be used. Examples thereof include an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive, and an epoxy-based pressure-sensitive adhesive. Among them, the rubber-based pressure-sensitive adhesive and the acrylic pressure-sensitive adhesive are preferable, and the acrylic pressure-sensitive adhesive is particularly preferable, from the viewpoint of pressure-sensitive adhesiveness. The pressure-sensitive adhesive may be used alone or in combination of two or more kinds thereof.

The acrylic pressure-sensitive adhesive contains, as a main agent, a polymer of a monomer obtained by adding a modifying monomer such as acrylonitrile, vinyl acetate, styrene, methyl methacrylate, acrylic acid, maleic anhydride, vinylpyrrolidone, glycidyl methacrylate, dimethylaminoethyl methacrylate, hydroxyethyl acrylate, or acrylamide to an alkyl (meth)acrylate such as ethyl acrylate, butyl acrylate, 2-ethylhexyl acrylate, isooctyl acrylate, or isononyl acrylate as a main component.

The rubber-based pressure-sensitive adhesive contains, as a main agent, a rubber-based polymer such as a natural rubber, a styrene-isoprene-styrene block copolymer, a styrene-butadiene-styrene block copolymer, a styrene-ethylene-butylene-styrene block copolymer, a styrene-butadiene rubber, polybutadiene, polyisoprene, polyisobutylene, a butyl rubber, a chloroprene rubber, and a silicone rubber.

These pressure-sensitive adhesives can be appropriately blended with a tackifying resin such as a rosin-based resin, a terpene-based resin, a styrene-based resin, an aliphatic petroleum-based resin, an aromatic petroleum-based resin, a xylene-based resin, a phenol-based resin, a cumarone-based resin, and a hydrogenated product thereof, and various additives such as a crosslinking agent, a viscosity modifier (thickener and the like), a leveling agent, a release modifier, a plasticizer, a softener, a filler, a colorant (pigment, dye, and the like), a surfactant, an antistatic agent, a preservative, an anti-aging agent, an ultraviolet absorber, an antioxidant, and a light stabilizer.

Any type of a solvent-based pressure-sensitive adhesive and a water-dispersible pressure-sensitive adhesive can be used as the pressure-sensitive adhesive 12. Here, from the viewpoint of enabling high-speed coating, being environmentally friendly, and having a small influence (swelling or dissolution) on the core material 11 caused by a solvent, the water-dispersible pressure-sensitive adhesive is preferable, and a water-dispersible acrylic pressure-sensitive adhesive is more preferable. Examples of the water-dispersible pressure-sensitive adhesive include an emulsion type pressure-sensitive adhesive produced by emulsion polymerization. Since a surfactant (emulsifier) is used in the emulsion polymerization, the emulsion type pressure-sensitive adhesive typically contains a surfactant (emulsifier).

The resistance value of the threadlike pressure-sensitive adhesive body 10 in the Z-axis direction will be described below.

(a) and (b) of FIG. 2 illustrate cross-sectional views of a composite of the first adherend 21, the threadlike pressure-sensitive adhesive body 10, and the second adherend 22. Here, (a) of FIG. 2 illustrates a state before the first adherend 21 and the second adherend 22 are pressure-bonded to the threadlike pressure-sensitive adhesive body 10, that is, a state before the first adherend 21 and the second adherend 22 are bonded via the threadlike pressure-sensitive adhesive body 10. In addition, (b) of FIG. 2 illustrates a state in which the first adherend 21 and the second adherend 22 are pressure-bonded to the threadlike pressure-sensitive adhesive body 10, that is, a state in which the first adherend 21 and the second adherend 22 are bonded via the threadlike pressure-sensitive adhesive body 10.

(a) and (b) of FIG. 2 illustrate a cross-sectional view of a composite in a direction perpendicular to the X-axis direction with the longitudinal direction of the threadlike pressure-sensitive adhesive body 10 (core material 11) as the X-axis direction. In the present embodiment, a direction in which a pressure is applied to the threadlike pressure-sensitive adhesive body 10 when the first adherend 21 and the second adherend 22 are pressure-bonded to the threadlike pressure-sensitive adhesive body 10 is defined as the Z-axis direction. In (a) and (b) of FIG. 2, a direction perpendicular to the Z-axis direction in plan view is taken as a Y-axis direction.

In the present embodiment, the resistance value of the threadlike pressure-sensitive adhesive body 10 in the Z-axis direction measured under the following conditions is $1.0 \times 10^6$ [Ω/100 mm] or less. Here, under the following conditions, two copper foil plates are used as the first adherend 21 and the second adherend 22. However, using the two copper foil plates as the adherends under the following conditions is only to define the resistance value of the threadlike pressure-sensitive adhesive body 10 in the Z-axis direction, and a material, a shape, and the like of the adherends to which the threadlike pressure-sensitive adhesive body 10 can be applied are not limited thereto.

(Conditions)

The two copper foil plates are bonded via the threadlike pressure-sensitive adhesive body 10, and the resistance value of the threadlike pressure-sensitive adhesive body 10 in the Z-axis direction is measured 30 minutes after performing pressure bonding at a pressure of 0.35 MPa for 10 seconds. Here, the Z-axis direction is a direction in which a pressure is applied to the threadlike pressure-sensitive adhesive body 10 when the two copper foil plates are pressure-bonded via the threadlike pressure-sensitive adhesive body 10. The measurement is performed at 23°C.

In the present embodiment, the resistance value of the threadlike pressure-sensitive adhesive body 10 in the Z-axis direction measured under the above conditions can be more specifically measured by the following measurement method.

First, two copper foil plates each having a size of 30 mm × 60 mm × a thickness of 0.5 mm are prepared.

A threadlike pressure-sensitive adhesive body 10 having a length of 100 mm is applied to one of the copper foil plates so as to have a square shape with a side of 25 mm. Thereafter, the other copper foil plate is bonded and pressure-bonded at a pressure of 0.35 MPa for 10 seconds.

After 30 minutes from the pressure bonding, a clip-type terminal is connected to each end portion of the bonded copper foil plate, a voltage of 0.4 V is applied, a flowing current is measured, and a resistance value of the threadlike pressure-sensitive adhesive body 10 in a thickness direction (Z-axis direction) substantially orthogonal to the longitudinal direction is calculated. The measurement is performed at room temperature (23°C).

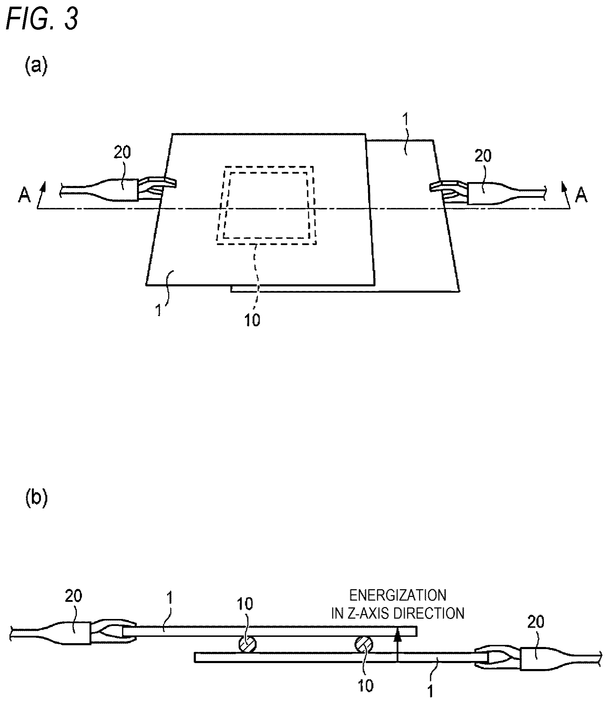

The above measurement method will be described in more detail in the section of Examples with reference to FIG. 3.

In the present embodiment, the resistance value of the threadlike pressure-sensitive adhesive body 10 in the Z-axis direction measured under the above conditions is $1.0 \times 10^6$ [Ω/100 mm] or less, preferably $1.0 \times 10^5$ [Ω/100 mm] or less, and more preferably $1.0 \times 10^4$ [Ω/100 mm] or less. When the resistance value of the threadlike pressure-sensitive adhesive body 10 in the Z-axis direction measured under the above conditions is $1.0 \times 10^6$ [Ω/100 mm] or less, the threadlike pressure-sensitive adhesive body 10 itself has high conductivity.

A lower limit of the resistance value of the threadlike pressure-sensitive adhesive body 10 in the Z-axis direction measured under the above conditions is not particularly limited, and is actually $1.0 \times 10^{-1}$ [Ω/100 mm] or more. The resistance value of the threadlike pressure-sensitive adhesive body 10 in the Z-axis direction measured under the above conditions is, for example, $1.0 \times 10^{-1}$ [Ω/100 mm] to $1.0 \times 10^6$ [Ω/100 mm].

The resistance value of the threadlike pressure-sensitive adhesive body 10 in the Z-axis direction measured under the above conditions can be adjusted according to a structure and a material of the conductive core material 11, a glue ratio to be described later, and the like. For example, the structure and the material of the core material 11 affect a resistance value of the core material 11, and for example, a type of the metal in the metal-coated fiber is likely to greatly affect the resistance value of the core material 11.

In the threadlike pressure-sensitive adhesive body 10 of the present embodiment, a ratio (glue ratio) of the pressure-sensitive adhesive 12 to the entire threadlike pressure-sensitive adhesive body 10 on a mass basis is preferably 10 mass% to 90 mass%.

When the glue ratio is 10 mass% or more, the threadlike pressure-sensitive adhesive body 10 is likely to have sufficient adhesion force. The glue ratio is more preferably 20 mass% or more, and further preferably 25 mass% or more.

In addition, when the glue ratio is 90 mass% or less, the resistance value of the threadlike pressure-sensitive adhesive body 10 is likely to be reduced. The glue ratio is more preferably 80 mass% or less, and further preferably 75 mass% or less.

The glue ratio (mass%) in the threadlike pressure-sensitive adhesive body 10 can be calculated by, for example, taking a value obtained by subtracting a mass (weight) of the core material 11 from a mass (weight) of the threadlike pressure-sensitive adhesive body 10 as a mass (weight) of the pressure-sensitive adhesive, and multiplying a value obtained by dividing the mass (weight) of the pressure-sensitive adhesive by the mass (weight) of the threadlike pressure-sensitive adhesive body 10 by 100.

A compression ratio of the threadlike pressure-sensitive adhesive body 10 of the present embodiment when compression is performed at 0.35 MPa for 10 seconds under a condition of 23°C is preferably 13% or more, more preferably 14% or more, and further preferably 15% or more.

A method for measuring the compression ratio is described in detail in the section of Examples.

As illustrated in (b) of FIG. 2, when the first adherend 21 and the second adherend 22 are pressure-bonded (bonded) via the threadlike pressure-sensitive adhesive body 10, the threadlike pressure-sensitive adhesive body 10 is deformed by pressure, and thus the conductive core material 11 (filament 13) included in the threadlike pressure-sensitive adhesive body 10 is more likely to come closer to the first adherend 21 and the second adherend 22 than before the pressure bonding (see (a) of FIG. 2), and as a result, the resistance value of the threadlike pressure-sensitive adhesive body 10 in the Z-axis direction is likely to be reduced. The above compression ratio is an index of ease of deformation of the threadlike pressure-sensitive adhesive body 10 due to a pressure, and a higher compression ratio is preferable because the resistance value of the threadlike pressure-sensitive adhesive body 10 in the Z-axis direction is likely to be reduced.

In a case where the adherends are bonded using the threadlike pressure-sensitive adhesive body 10, as the compression ratio is higher, the threadlike pressure-sensitive adhesive body 10 is more likely to be deformed, a contact area with respect to the adherend is larger, and the adhesion force can be improved. Further, as the above compression ratio is higher, when a force is applied in the direction in which the adherends bonded using the threadlike pressure-sensitive adhesive body 10 are peeled off, a stress is likely to be dispersed due to deformation of the core material 11, and therefore, a stress is less likely to be applied to an interface (pressure-sensitive adhesive surface) between the threadlike pressure-sensitive adhesive body 10 and the adherend, so that peeling is less likely to occur.

In order to further improve the adhesion force of the threadlike pressure-sensitive adhesive body 10 of the present embodiment, it is preferable that a large amount of the pressure-sensitive adhesive 12 is applied to the core material 11, and specifically, the adhesion amount of the pressure-sensitive adhesive 12 (weight of pressure-sensitive adhesive 12 per unit length) in the threadlike pressure-sensitive adhesive body 10 of the present embodiment is preferably 5 mg/m or more, more preferably 8 mg/m or more, and further preferably 16 mg/m or more. On the other hand, when the adhesion amount of the pressure-sensitive adhesive 12 is excessive, it is necessary to apply the pressure-sensitive adhesive 12 to the core material 11 a plurality of times in the production process, or it takes time to dry the applied pressure-sensitive adhesive 12, resulting in a low production efficiency. Therefore, the adhesion amount of the pressure-sensitive adhesive 12 in the threadlike pressure-sensitive adhesive body 10 of the present embodiment is preferably 200 mg/m or less, more preferably 180 mg/m or less, and further preferably 160 mg/m or less.

The pressure-sensitive adhesive 12 may cover the entire or a part of the surface of the core material 11 in the longitudinal direction, but preferably covers the entire circumference of the surface of the core material 11 in the longitudinal direction. The entire circumference of the surface of the core material 11 refers to an entire peripheral surface of the core material 11, and means the entire 360° circumference of the surface of the core material 11, centered on a center line of the core material 11 in the longitudinal direction.

However, an end surface of the core material 11 may or may not be covered with the pressure-sensitive adhesive 12. For example, in a case where the threadlike pressure-sensitive adhesive body 10 is cut during production or during use, the end surface of the core material 11 may not be covered with the pressure-sensitive adhesive 12.

By covering the entire circumference of the surface of the core material 11 in the longitudinal direction with the pressure-sensitive adhesive 12, a threadlike pressure-sensitive adhesive body 10 having excellent strength can be obtained. The reason is presumed to be that, since the core material 11 is not exposed to the surface of the threadlike pressure-sensitive adhesive body 10, stress is prevented from concentrating on one part of the core material 11 and causing breakage.

In addition, by covering the entire circumference of the surface of the core material 11 in the longitudinal direction with the pressure-sensitive adhesive 12, a gap is less likely to be generated in a bonded portion between the threadlike pressure-sensitive adhesive body 10 and the adherend, and a threadlike pressure-sensitive adhesive body 10 having more excellent adhesiveness can be obtained.

In the threadlike pressure-sensitive adhesive body 10 of the present embodiment, the core material 11 includes the plurality of filaments 13, the pressure-sensitive adhesive 12 may cover the surface of the core material 11 in the longitudinal direction, and the core material 11 may be impregnated with the pressure-sensitive adhesive 12. Here, "the core material 11 is impregnated with the pressure-sensitive adhesive 12" means that the pressure-sensitive adhesive 12 is present among the plurality of filaments 13 in the core material 11. When the core material 11 is impregnated with the pressure-sensitive adhesive 12, the pressure-sensitive adhesive 12 and the core material 11 maintain adhesion therebetween and are hard to peel off from each other, thereby improving the strength of the threadlike pressure-sensitive adhesive body 10.

In addition, in the threadlike pressure-sensitive adhesive body 10 of the present embodiment, a void may be partially present between the core material 11 and the pressure-sensitive adhesive 12.

A diameter of the threadlike pressure-sensitive adhesive body 10 according to the present embodiment is preferably 0.1 mm or more, and more preferably 0.2 mm or more, from the viewpoint of strength and handleability. In addition, the diameter of the threadlike pressure-sensitive adhesive body 10 is preferably 1 mm or less, and more preferably 0.9 mm or less, from the viewpoint of self-pressure-sensitive adhesive force. The threadlike pressure-sensitive adhesive body 10 of the present embodiment can have sufficient adhesion force even when the diameter is as thin as, for example, 0.3 mm or less.

An example of a method for producing the threadlike pressure-sensitive adhesive body 10 of the present embodiment will be described below. The method for producing the threadlike pressure-sensitive adhesive body 10 of the present embodiment is not limited to a method to be described below.

The threadlike pressure-sensitive adhesive body 10 of the present embodiment can be obtained by coating the surface of the core material 11 with a pressure-sensitive adhesive coating liquid by dipping, immersion, coating, or the like, and then heating and drying. The coating liquid can be applied by using a common coater such as a gravure roll coater, a reverse roll coater, a kiss roll coater, a dip roll coater, a bar coater, a knife coater, and a spray coater. A temperature and a time for drying are not particularly limited and may be appropriately set, and the temperature for drying is preferably 40°C to 200°C, further preferably 50°C to 180°C, and particularly preferably 70°C to 120°C. The time for drying is preferably 5 seconds to 20 minutes, further preferably 5 seconds to 10 minutes, and particularly preferably 10 seconds to 5 minutes.

The threadlike pressure-sensitive adhesive body 10 of the present embodiment has good conductivity, can be applied to a narrow member or a narrow region, and is easily applied to a complex shape such as a curved line, a curved surface, and an uneven shape. Further, since the threadlike pressure-sensitive adhesive body 10 also has excellent pressure-sensitive adhesive force, it can be used to adhere various articles.

For example, the threadlike pressure-sensitive adhesive body 10 of the present embodiment can be suitably used for fixing an article in producing an electronic device, and can be applied to fixing of a conductive linear member or the like.

Specifically, the threadlike pressure-sensitive adhesive body 10 of the present embodiment can be suitably used for fixing, in a desired form, various wire materials such as an electric wire, a conductive fiber, and a wire, or a conductive linear member such as a narrow article. Even in a case where the wire material or the narrow wire member is fixed to another article in a complex shape, the threadlike pressure-sensitive adhesive body 10 of the present embodiment can be firmly fixed with excellent workability while preventing protrusion, wrinkles, and overlapping in accordance with the complex shape that the wire material or the narrow article should have.

As described above, the following matters are described in the present description.

(1) A threadlike pressure-sensitive adhesive body including: a conductive core material including a plurality of filaments; and a pressure-sensitive adhesive covering a surface of the core material in a longitudinal direction, in which

a resistance value of the threadlike pressure-sensitive adhesive body in a Z-axis direction measured under the following conditions is $1.0 \times 10^6$ [Ω/100 mm] or less, (Conditions)
two copper foil plates are bonded via the threadlike pressure-sensitive adhesive body, and the resistance value of the threadlike pressure-sensitive adhesive body in the Z-axis direction is measured 30 minutes after performing pressure bonding at a pressure of 0.35 MPa for 10 seconds, here, the Z-axis direction is a direction in which a pressure is applied to the threadlike pressure-sensitive adhesive body when the two copper foil plates are pressure-bonded via the threadlike pressure-sensitive adhesive body, and The measurement is performed at 23°C.

(2) The threadlike pressure-sensitive adhesive body according to (1), in which a compression ratio when compression is performed at 0.35 MPa for 10 seconds under a condition of 23°C is 13% or more.
(3) The threadlike pressure-sensitive adhesive body according to (1) or (2), in which the core material includes a metal-coated fiber in which a surface layer of a fiber formed of a resin is coated with a metal.
(4) The threadlike pressure-sensitive adhesive body according to any of (1) to (3), in which the pressure-sensitive adhesive contains a surfactant.
(5) The threadlike pressure-sensitive adhesive body according to any of (1) to (4), in which the threadlike pressure-sensitive adhesive body has a diameter of 1 mm or less.

Examples

Hereinafter, the present invention will be described in detail with reference to Examples, but the present invention is not limited to these Examples.

<Example 1>

(Preparation of Emulsion-based Acrylic Polymer 1)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 parts by mass of 2,2'-azobis[N-(2-carboxyethyl)-2-methylpropionamidine]n hydrate (polymerization initiator) was added. While the system was maintained at 60°C, a monomer emulsion A below was gradually added dropwise thereto over 4 hours to allow an emulsion polymerization reaction to proceed.
Here, examples of the monomer emulsion A include an emulsion obtained by adding 85 parts by mass of 2-ethylhexyl acrylate, 13 parts by mass of methacrylic acid, 1.25 parts by mass of acrylic acid, 0.75 parts by mass of methacrylic acid, 0.05 parts by mass of lauryl mercaptan (chain transfer agent), 0.02 parts by mass of γ-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 30 parts by mass of ion-exchanged water for emulsification.
After completion of the dropwise addition of the monomer emulsion A, the system was further kept at 60°C for 3 hours and cooled to room temperature, and pH was then adjusted to 7 by addition of 10% ammonia water to obtain an emulsion-based acrylic polymer 1 (water-dispersible acrylic polymer 1).

(Preparation of Pressure-sensitive adhesive Coating Liquid 1)

A tackifying resin emulsion (manufactured by Arakawa Chemical Industries, Ltd., trade name: "Tamanol E200NT") in an amount of 35 parts by mass on a solid basis and a thickener (manufactured by Toagosei Co., Ltd., trade name "ARON B-500") in an amount of 0.475 parts by mass on a solid basis were added to 100 parts by mass of the acrylic polymer contained in the emulsion-based acrylic polymer 1. Further, ion-exchanged water was added to adjust a solid content concentration to 45 mass% to obtain a pressure-sensitive adhesive coating liquid 1.

(Production of Threadlike Pressure-sensitive adhesive Body)

A multifilament thread obtained by twisting a copper sulfide-coated nylon fiber having a fineness of 235 dtex and the number of filaments of 15 (manufactured by Nihon Sanmo Dyeing Co., Ltd., trade name "Thunderon (registered trademark)") 200 times per 1 m was prepared as a core material.
The pressure-sensitive adhesive coating liquid 1 was applied to the above core material by performing dipping using a coating roller. Thereafter, drying was performed at 100°C for 1 minute to obtain a threadlike pressure-sensitive adhesive body with a glue ratio of 18 mass%.

<Example 2>

A threadlike pressure-sensitive adhesive body of Example 2 was obtained in the same manner as in Example 1 except that the pressure-sensitive adhesive coating liquid 1 was applied by a dipping step using a coating roller to obtain a threadlike pressure-sensitive adhesive body having a glue ratio of 34 mass%.

<Example 3>

A threadlike pressure-sensitive adhesive body of Example 3 was obtained in the same manner as in Example 1 except that the pressure-sensitive adhesive coating liquid 1 was applied by a dipping step using a coating roller to obtain a threadlike pressure-sensitive adhesive body having a glue ratio of 48 mass%.

<Example 4>

A threadlike pressure-sensitive adhesive body of Example 4 was obtained in the same manner as in Example 1 except that a multifilament thread obtained by twisting a silver-coated polyester fiber having a fineness of 165 dtex and the number of filaments of 60 (manufactured by SEIREN CO., LTD., trade name "Metaflex") 0 times per 1 m (twist coefficient: 0) was prepared as the core material, and the pressure-sensitive adhesive coating liquid 1 was applied so as to have a glue ratio of 69 mass%.

<Example 5>

A threadlike pressure-sensitive adhesive body of Example 5 was obtained in the same manner as in Example 1 except that a multifilament thread obtained by twisting a silver-coated polyester fiber having a fineness of 165 dtex and the number of filaments of 60 (manufactured by SEIREN CO., LTD., trade name "Metaflex") 80 times per 1 m (twist coefficient: 10) was prepared as the core material, and the pressure-sensitive adhesive coating liquid 1 was applied so as to have a glue ratio of 68 mass%.

<Example 6>

A threadlike pressure-sensitive adhesive body of Example 6 was obtained in the same manner as in Example 1 except that a multifilament thread obtained by twisting a silver-coated polyester fiber having a fineness of 165 dtex and the number of filaments of 60 (manufactured by SEIREN CO., LTD., trade name "Metaflex") 200 times per 1 m (twist coefficient: 26) was prepared as the core material, and the pressure-sensitive adhesive coating liquid 1 was applied so as to have a glue ratio of 59 mass%.

<Example 7>

A threadlike pressure-sensitive adhesive body of Example 7 was obtained in the same manner as in Example 1 except that a multifilament thread obtained by twisting a silver-coated polyester fiber having a fineness of 165 dtex and the number of filaments of 60 (manufactured by SEIREN CO., LTD., trade name "Metaflex") 500 times per 1 m (twist coefficient: 64) was prepared as the core material, and the pressure-sensitive adhesive coating liquid 1 was applied so as to have a glue ratio of 56 mass%.

<Example 8>

A threadlike pressure-sensitive adhesive body of Example 8 was obtained in the same manner as in Example 1 except that a multifilament thread obtained by twisting a silver-coated polyester fiber having a fineness of 33 dtex and the number of filaments of 12 (manufactured by SEIREN CO., LTD., trade name "Metaflex") 420 times per 1 m (twist coefficient: 24) was prepared as the core material, and the pressure-sensitive adhesive coating liquid 1 was applied so as to have a glue ratio of 57 mass%.

<Example 9>

A threadlike pressure-sensitive adhesive body of Example 9 was obtained in the same manner as in Example 1 except that a multifilament thread obtained by twisting a silver-coated polyester fiber having a fineness of 99 dtex and the number of filaments of 36 (manufactured by SEIREN CO., LTD., trade name "Metaflex") 250 times per 1 m (twist coefficient: 25) was prepared as the core material, and the pressure-sensitive adhesive coating liquid 1 was applied so as to have a glue ratio of 60 mass%.

<Example 10>

A threadlike pressure-sensitive adhesive body of Example 10 was obtained in the same manner as in Example 1 except that a multifilament thread obtained by twisting a silver-coated polyester fiber having a fineness of 264 dtex and the number of filaments of 96 (manufactured by SEIREN CO., LTD., trade name "Metaflex") 150 times per 1 m (twist coefficient: 24) was prepared as the core material, and the pressure-sensitive adhesive coating liquid 1 was applied so as to have a glue ratio of 64 mass%.

<Example 11>

A threadlike pressure-sensitive adhesive body of Example 11 was obtained in the same manner as in Example 1 except that a bundle of four nichrome wires (0.2 mm) was used as the core material, and the pressure-sensitive adhesive coating liquid 1 was applied by a dipping method without using a coating roll to obtain a threadlike pressure-sensitive adhesive body having a glue ratio of 18 mass%.

<Comparative Example 1>

A threadlike pressure-sensitive adhesive body of Comparative Example 1 was obtained in the same manner as in Example 1 except that a threadlike pressure-sensitive adhesive body having a glue amount of 44 mass% was obtained using, as the core material, a multifilament thread obtained by twisting polyethylene terephthalate (PET) fibers having a fineness of 167 dtex and the number of filaments of 48 190 times per 1 m.

<Comparative Example 2>

The threadlike pressure-sensitive adhesive body used in Comparative Example 1 and a copper sulfide-coated nylon fiber having a fineness of 235 dtex and the number of filaments of 15 as a conductive fiber were prepared.
The threadlike pressure-sensitive adhesive body and the conductive fiber were twisted 30 times per 1 m with a twisting machine (manufactured by OLYMPUS CORPORATION, trade name "String-II high-speed rotary string twister") to obtain a composite of Comparative Example 2 having a configuration in which the conductive fiber was wound around the threadlike pressure-sensitive adhesive body.

<Comparative Example 3>

A threadlike pressure-sensitive adhesive body of Comparative Example 3 was obtained in the same manner as in Example 1 except that nichrome wires (diameter: 0.2 mm) were used as the core material, and the pressure-sensitive adhesive coating liquid 1 was applied by a dipping method without using a coating roll to obtain a threadlike pressure-sensitive adhesive body having a glue ratio of 12 mass%.

(Method for Evaluating Physical Properties of Threadlike Pressure-sensitive adhesive Body)

For each of the threadlike pressure-sensitive adhesive bodies of Examples 1 to 11 and Comparative Examples 1 to 3 (composite of threadlike pressure-sensitive adhesive body and conductive fiber in Comparative Example 2), a compression ratio, a shear force serving as an index of adhesion force, and a resistance value in the Z-axis direction (Z-axis resistance value) were measured as follows. Respective results are shown in Tables 1 and 2.

[Compression Ratio]

A threadlike pressure-sensitive adhesive body having a length of 25 mm in the longitudinal direction was prepared and sandwiched between two PET films (thickness: 50 $\mu$m) to prepare a sample. This sample was pressure-bonded with respect to a width of the threadlike pressure-sensitive adhesive body at a pressure of 0.35 MPa for 10 seconds using a micro strength evaluation tester MicroAutoserve (manufactured by Shimadzu Corporation.). The compression ratio of the threadlike pressure-sensitive adhesive body in this case was calculated by the following Formula (1). A test was performed under a condition of 23°C.

Compression ratio [%] = {(height of entire sample when compression is performed at pressure of 0.35 MPa for 10 seconds) - (thickness of PET film) $\times$ 2} $\times$ 100/(height of threadlike pressure-sensitive adhesive body before pressure bonding)     (1)

[Shear Force]

First, two SUS304BA plates having a size of 30 mm $\times$ 60 mm were prepared.
A threadlike pressure-sensitive adhesive body having a length of 100 mm was applied to one of the SUS304BA plates so as to have a square shape with a side of 25 mm. Thereafter, the other SUS304BA plate was bonded and pressure-bonded at a pressure of 0.35 MPa for 10 seconds. A test was performed under a condition of 23°C.
After 30 minutes from the pressure bonding, the SUS304BA plate was pulled with a tensile tester ("Shimadzu Autograph AG-100M2" manufactured by Shimadzu Corporation) at a peeling rate of 300 mm/min to measure the shear force (N).

[Z-axis Resistance Value]

First, two copper foil plates having a size of 30 mm $\times$ 60 mm were prepared.
As illustrated in FIG. 3, the threadlike pressure-sensitive adhesive body 10 having a length of 100 mm was applied to one of the copper foil plates (copper foil plate 1) so as to have a square shape with a side of 25 mm. Thereafter, the other copper foil plate (copper foil plate 1) was bonded and pressure-bonded at a pressure of 0.35 MPa for 10 seconds.
After 30 minutes from the pressure bonding, clip-type terminals 20 were connected to both end portions of the bonded copper foil plates, a voltage of 0.4 V is applied, a flowing current is measured, and a resistance value of the

# EP 4 692 269 A1

threadlike pressure-sensitive adhesive body 10 in the thickness direction (Z-axis direction) substantially orthogonal to the longitudinal direction is calculated. A perspective view of a state in which the two copper foil plates are bonded is illustrated in (a) of FIG. 3, and a cross-sectional view taken along a line A-A in (a) of FIG. 3 is illustrated in (b) of FIG. 3. In addition, the measurement is performed at room temperature (23°C).

(Resistance Value of Core Material in Longitudinal Direction (X-axis Direction))

The core material used in each of Examples and Comparative Examples was fixed between 100 mm thereof by clip-type terminals.

A voltage of 0.4 V was applied, and a resistance value was calculated from a flowing current to obtain the resistance value of the core material in the longitudinal direction (X-axis direction).

[Table 1]

Table 1

| | | | Example 1 | Example 2 | Example 3 | Example 4 |
|---|---|---|---|---|---|---|
| Configuration | Core material | Material | Copper-nylon | Copper-nylon | Copper-nylon | Silver-PET |
| | | Fineness [T] | 235 | 235 | 235 | 165 |
| | | Number of filaments [filaments] | 15 | 15 | 15 | 60 |
| | | Single thread diameter [$\mu$m] | 20 to 30 | 20 to 30 | 20 to 30 | 15 to 25 |
| | | Twist coefficient | 31 | 31 | 31 | 0 |
| | | X-axis resistance value [$\Omega$/100 mm] | 4.0E+04 | 4.0E+04 | 4.0E+04 | 1.5E+01 |
| | Pressure-sensitive adhesive | Presence/absence of emulsifier | Present | Present | Present | Present |
| | | Glue ratio [mass%] | 18 | 34 | 48 | 69 |
| | Threadlike pressure-sensitive adhesive body | Diameter [mm] | 0.2 | 0.2 | 0.2 | 0.35 |
| | | Winding | - | - | - | - |
| Physical properties of threadlike pressure-sensitive adhesive body | Compression ratio | 0.35 MPa $\times$ 10 s [%] | 29 | 33 | 34 | 50 |
| | Adhesion force | Shear force [Mpa] | 0.34 | 0.79 | 0.90 | 0.94 |
| | Resistance value | Z axis [$\Omega$/100 mm] | 5.0E+03 | 3.0E+04 | 2.0E+05 | 1.5E+00 |

13

Table 1 (continued)

|  |  |  | Example 5 | Example 6 | Example 7 |
|---|---|---|---|---|---|
| Configuration | Core material | Material | Silver-PET | Silver-PET | Silver-PET |
|  |  | Fineness [T] | 165 | 165 | 165 |
|  |  | Number of filaments [filaments] | 60 | 60 | 60 |
|  |  | Single thread diameter [μm] | 15 to 25 | 15 to 25 | 15 to 25 |
|  |  | Twist coefficient | 10 | 26 | 64 |
|  |  | X-axis resistance value [Ω/100 mm] | 1.5E+01 | 1.5E+01 | 1.5E+01 |
|  | Pressure-sensitive adhesive | Presence/absence of emulsifier | Present | Present | Present |
|  |  | Glue ratio [mass%] | 68 | 59 | 56 |
|  | Threadlike pressure-sensitive adhesive body | Diameter [mm] | 0.35 | 0.32 | 0.32 |
|  |  | Winding | - | - | - |
| Physical properties of threadlike pressure-sensitive adhesive body | Compression ratio | 0.35 MPa × 10 s [%] | 46 | 36 | 20 |
|  | Adhesion force | Shear force [Mpa] | 1.21 | 1.11 | 0.91 |
|  | Resistance value | Z axis [Ω/100 mm] | 2.5E+00 | 1.4E+00 | 1.3E+00 |

[Table 2]

Table 2

|  |  |  | Example 8 | Example 9 | Example 10 | Example 11 |
|---|---|---|---|---|---|---|
| Configuration | Core material | Material | Silver-PET | Silver-PET | Silver-PET | Nichrome wire |
|  |  | Fineness [T] | 33 | 99 | 264 | - |
|  |  | Number of filaments [filaments] | 12 | 36 | 96 | 4 |
|  |  | Single thread diameter [μm] | 15 to 25 | 15 to 25 | 15 to 25 | 200 |
|  |  | Twist coefficient | 24 | 25 | 24 | 0 |
|  |  | X-axis resistance value [Ω/100 mm] | 3.0E+01 | 2.0E+01 | 1.0E+01 | 1.0E+00 |
|  | Pressure-sensitive adhesive | Presence/absence of emulsifier | Present | Present | Present | Present |
|  |  | Glue ratio [mass%] | 57 | 60 | 64 | 18 |
|  | Threadlike pressure-sensitive adhesive body | Diameter [mm] | 0.14 | 0.23 | 0.38 | 0.3 |
|  |  | Winding | - | - | - | - |

(continued)

|  |  |  | Example 8 | Example 9 | Example 10 | Example 11 |
|---|---|---|---|---|---|---|
| Physical properties of threadlike pressure-sensitive adhesive body | Compression ratio | 0.35 MPa × 10 s [%] | 22 | 25 | 34 | 12 |
|  | Adhesion force | Shear force [Mpa] | 0.38 | 0.53 | 0.88 | 0.30 |
|  | Resistance value | Z axis [Ω/100 mm] | 1.0E+00 | 1.0E+00 | 9.0E-01 | 1.0E+01 |

Table 2 (continued)

|  |  |  | Comparative Example 1 | Comparative Example 2 | Comparative Example 3 |
|---|---|---|---|---|---|
| Configuration | Core material | Material | PET | PET | Nichrome wire |
|  |  | Fineness [T] | 167 | 167 | - |
|  |  | Number of filaments [filaments] | 48 | 48 | 1 |
|  |  | Single thread diameter [μm] | 20 | 20 | 200 |
|  |  | Twist coefficient | 25 | 25 | 0 |
|  |  | X-axis resistance value [Ω/100 mm] | Insulating | Insulating | 2.7E+00 |
|  | Pressure-sensitive adhesive | Presence/absence of emulsifier | Present | Present | Present |
|  |  | Glue ratio [mass%] | 44 | 17 | 12 |
|  | Threadlike pressure-sensitive adhesive body | Diameter [mm] | 0.2 | 0.2 | 0.2 |
|  |  | Winding | - | Copper-nylon | - |
| Physical properties of threadlike pressure-sensitive adhesive body | Compression ratio | 0.35 MPa × 10 s [%] | 39 | 30 | 5 |
|  | Adhesion force | Shear force [Mpa] | 0.80 | 0.12 | 0.15 |
|  | Resistance value | Z axis [Ω/100 mm] | Insulating | 5.0E+03 | 1.5E+01 |

The threadlike pressure-sensitive adhesive body of Comparative Example 1 in which an insulating PET fiber was used as the core material had a shear force of 0.80 [MPa] and exhibited a sufficient adhesion force, but the threadlike pressure-sensitive adhesive body itself was insulating.

In the composite of Comparative Example 2 obtained by winding the conductive fiber around the threadlike pressure-sensitive adhesive body used in Comparative Example 1, the Z-axis resistance value of the composite was $5.0 \times 10^3$ [Ω/100 mm] and sufficient conductivity was obtained, but the shear force was as low as 0.12 [MPa] and the adhesion force was insufficient. The reason is presumed to be that a part of a surface of the threadlike pressure-sensitive adhesive body is covered with the conductive fiber wound around the threadlike pressure-sensitive adhesive body, and many non-pressure-sensitive adhesive portions are present on the surface of the threadlike pressure-sensitive adhesive body.

In the threadlike pressure-sensitive adhesive body of Comparative Example 3 using a single nichrome wire (monofilament) as the core material, the Z-axis resistance value of the threadlike pressure-sensitive adhesive body was $1.5 \times 10^1$ [Ω/100 mm] and the conductivity was sufficient, but the shear force was as low as 0.15 [MPa] and the adhesion force was insufficient. In addition, the compression ratio of the threadlike pressure-sensitive adhesive body was as low as 5 [%]. The reason is presumed to be that, when the adherend (SUS304BA plate) was pressure-bonded to the threadlike pressure-sensitive adhesive body, the core material formed of the single nichrome wire (monofilament) was less likely to be deformed, the compression ratio of the threadlike pressure-sensitive adhesive body was low, and a contact area with the adherend (SUS304BA plate) was small, resulting in low adhesion force.

On the other hand, each of the threadlike pressure-sensitive adhesive bodies of Examples 1 to 11 had a high shear force and exhibited a sufficient adhesion force. The reason is presumed to be that, since the core material formed of the multifilament was used, the core material was likely to be deformed when the adherend (SUS304BA plate) was pressure-bonded to the threadlike pressure-sensitive adhesive body, and the contact area with the adherend (SUS304BA plate) was increased.

Each of the threadlike pressure-sensitive adhesive bodies of Examples 1 to 11 had a low resistivity in the Z-axis direction and exhibited excellent conductivity when the adherend (copper foil plate) was pressure-bonded. The reason is presumed to be that a core material having high conductivity was used and a ratio (glue ratio) of the pressure-sensitive adhesive was also appropriate. In addition, the reason is presumed to be that, since the core material formed of the multifilament was used, the core material was likely to be deformed when the adherend (copper foil plate) was pressure-bonded to the threadlike pressure-sensitive adhesive body, and the adherend (copper foil plate) and the core material were likely to be brought close to each other, resulting in a low resistance value.

Further, the threadlike pressure-sensitive adhesive body of Example 11 in which a bundle of four nichrome wires was used as the core material exhibited a higher adhesion force as compared to the threadlike pressure-sensitive adhesive body of Comparative Example 3 in which a core material formed of a single nichrome wire (monofilament) was used.

The threadlike pressure-sensitive adhesive bodies of Examples 1 to 10 in which a multifilament thread formed of a copper sulfide-coated nylon fiber or a silver-coated polyester fiber was used as the core material exhibited a higher adhesion force as compared to the threadlike pressure-sensitive adhesive body of Example 11 in which a bundle of four nichrome wires was used as the core material. It is presumed that, in the threadlike pressure-sensitive adhesive bodies of Examples 1 to 10, since the metal-coated fiber having higher flexibility was used as the core material, the compression ratio of the threadlike pressure-sensitive adhesive body was higher, and the contact area with the adherend (SUS304BA plate) was larger, and as a result, a higher adhesion force was exhibited.

Although various embodiments have been described above with reference to the drawings, the present invention is not limited to these examples. It is apparent that a person skilled in the art could conceive of various changes or modifications within the scope of claims, and these changes or modifications are considered to belong to the technical range of the present invention as a matter of course. In addition, the components described in the above embodiments may be freely combined without departing from the spirit of the invention.

Note that, the present application is based on a Japanese Patent Application (No. 2023-54107) filed on March 29, 2023, contents of which are incorporated herein by reference.

REFERENCE SIGNS LIST

1: copper foil plate
10: threadlike pressure-sensitive adhesive body
11: core material
12: pressure-sensitive adhesive
13: filament
20: clip-type terminal
21: first adherend
22: second adherend

**Claims**

1. A threadlike pressure-sensitive adhesive body comprising: a conductive core material including a plurality of filaments; and a pressure-sensitive adhesive covering a surface of the core material in a longitudinal direction, wherein

   a resistance value of the threadlike pressure-sensitive adhesive body in a Z-axis direction measured under the following conditions is $1.0 \times 10^6$ [Ω/100 mm] or less, (Conditions)
   two copper foil plates are bonded via the threadlike pressure-sensitive adhesive body, and the resistance value of the threadlike pressure-sensitive adhesive body in the Z-axis direction is measured 30 minutes after performing pressure bonding at a pressure of 0.35 MPa for 10 seconds, here, the Z-axis direction is a direction in which a pressure is applied to the threadlike pressure-sensitive adhesive body when the two copper foil plates are pressure-bonded via the threadlike pressure-sensitive adhesive body, and The measurement is performed at 23°C.

2. The threadlike pressure-sensitive adhesive body according to claim 1, wherein a compression ratio when compression is performed at 0.35 MPa for 10 seconds under a condition of 23°C is 13% or more.

3. The threadlike pressure-sensitive adhesive body according to claim 1 or 2, wherein the core material includes a metal-coated fiber in which a surface layer of a fiber formed of a resin is coated with a metal.

4. The threadlike pressure-sensitive adhesive body according to claim 1 or 2, wherein the pressure-sensitive adhesive contains a surfactant.

5. The threadlike pressure-sensitive adhesive body according to claim 1 or 2, wherein the threadlike pressure-sensitive adhesive body has a diameter of 1 mm or less.

*FIG. 1*

*FIG. 2*

(a)

(b)

*FIG. 3*

(a)

(b)

ENERGIZATION
IN Z-AXIS DIRECTION

## INTERNATIONAL SEARCH REPORT

| International application No. |
| --- |
| **PCT/JP2024/011490** |

### A. CLASSIFICATION OF SUBJECT MATTER

*C09J 201/00*(2006.01)i; *C09J 9/02*(2006.01)i
FI: C09J201/00; C09J9/02

According to International Patent Classification (IPC) or to both national classification and IPC

### B. FIELDS SEARCHED

Minimum documentation searched (classification system followed by classification symbols)

C09J1/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-76066 A (NITTO DENKO CORP.) 21 May 2020 (2020-05-21) whole document | 1-5 |
| A | JP 2020-19923 A (NITTO DENKO CORP.) 06 February 2020 (2020-02-06) whole document | 1-5 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **13 June 2024** | **25 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/011490**

| Patent document cited in search report | | | Publication date (day/month/year) | Patent family member(s) | | | Publication date (day/month/year) |
|---|---|---|---|---|---|---|---|
| JP | 2020-76066 | A | 21 May 2020 | US | 2021/0380846 | A1 | |
| | | | | whole document | | | |
| | | | | US | 2021/0388237 | A1 | |
| | | | | WO | 2020/071508 | A1 | |
| | | | | WO | 2020/071509 | A1 | |
| | | | | EP | 3862406 | A1 | |
| | | | | EP | 3862404 | A1 | |
| | | | | CN | 112805349 | A | |
| | | | | CN | 116905226 | A | |
| | | | | CN | 112823192 | A | |
| | | | | KR | 10-2021-0070992 | A | |
| | | | | KR | 10-2021-0070993 | A | |
| | | | | TW | 202018031 | A | |
| | | | | TW | 202027972 | A | |
| | | | | JP | 2020-75489 | A | |
| JP | 2020-19923 | A | 06 February 2020 | US | 2021/0009864 | A1 | |
| | | | | WO | 2019/163788 | A1 | |
| | | | | EP | 3757185 | A1 | |
| | | | | TW | 201936870 | A | |
| | | | | CN | 111742025 | A | |
| | | | | KR | 10-2020-0123131 | A | |
| | | | | KR | 10-2024-0007719 | A | |
| | | | | JP | 2023-103474 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022209904 A

- JP 2023054107 A